# EUROPEAN PATENT APPLICATION

(11) **EP 3 944 096 A1**
(43) Date of publication of application: **26.01.2022**
(21) Application number: 20808898.9
(22) Date of filing: 27.04.2020
(51) Int. Cl.: G06F 16/29

(54) **CONTROL DEVICE AND PRESENTATION SYSTEM**

(30) Priority: 17.05.2019 JP 2019093977; 06.04.2020 JP 2020068555
(71) Applicant: Kabushiki Kaisha Tokai Rika Denki Seisakusho, Aichi 480-0195 (JP)
(72) Inventor: ONO, Yasuhiro, Niwa-gun, Aichi 480-0195 (JP); OHNISHI, Takeshi, Niwa-gun, Aichi 480-0195 (JP); SASAKI, Shinobu, Niwa-gun, Aichi 480-0195 (JP); IWATA, Kenji, Niwa-gun, Aichi 480-0195 (JP); TAKAGI, Yuka, Niwa-gun, Aichi 480-0195 (JP); HIROSE, Fumiaki, Niwa-gun, Aichi 480-0195 (JP); MITSUI, Yuji, Niwa-gun, Aichi 480-0195 (JP); TAKAI, Toshihito, Niwa-gun, Aichi 480-0195 (JP); ARAYA, Takao, Niwa-gun, Aichi 480-0195 (JP); NOMURA, Keiji, Niwa-gun, Aichi 480-0195 (JP); NAKANE, Keita, Niwa-gun, Aichi 480-0195 (JP); SENGOKU, Takakazu, Niwa-gun, Aichi 480-0195 (JP); IMAI, Tomomi, Niwa-gun, Aichi 480-0195 (JP)
(74) Representative: TBK
(86) International application number: PCT/JP2020/017880
(87) International publication number: WO 2020/235302

(57) **Abstract**

A user is allowed to intuitively visually recognize information that is beneficial to the user.

There is provided a control device including a control unit configured to control presentation of information using a presentation unit, in which the control unit causes the presentation unit to present beneficial information that is beneficial to a user as the information. In addition, there is provided a presentation system including: a presentation unit configured to perform presentation of information to a user; and a control unit configured to control of the presentation of information using the presentation unit, in which the control unit causes the presentation unit to present beneficial information that is beneficial to the user as the information.

## Description

### Technical Field

The present invention relates to a control device and a presentation system.

### Background Art

In recent years, devices presenting various kinds of information to users have been developed. For example, in Patent Literature 1, a vicinity information display device displaying information of facilities present in the vicinity of a current position has been made public.

### Citation List

### Patent Literature

Patent Literature 1: JP 2010-8162A

### Summary of Invention

### Technical Problem

According to the device described above, various kinds of information about the vicinity can be acquired, and the information can be presented to a user. However, in a case in which the amount of acquired information is large, the amount of information presented to a user becomes large as well. For this reason, there is demand for a technique for presenting information that can be more easily perceived by a user.

The present invention is in view of the problems described above, and an object of the present invention is to provide a control device and a presentation system, which are new and improved, capable of allowing a user to perceive information that is beneficial to the user.

### Solution to Problem

In order to solve the problems described above, according to a certain aspect of the present invention, there is provided a control device including a control unit configured to control presentation of information using a presentation unit, in which the control unit causes the presentation unit to present beneficial information that is beneficial to a user as the information.

In addition, the control unit may cause the presentation unit to present the information in a case in which a predetermined condition is satisfied.

In addition, the predetermined condition may be a change of a relative physical quantity with a target associated with the beneficial information.

In addition, the predetermined condition may be a case in which a state in which the target associated with the beneficial information is perceivable for the user is formed.

In addition, the predetermined condition may be a case in which a state in which the target associated with the beneficial information is visually recognizable for the user is formed.

In addition, the predetermined condition may be a case in which a state in which the target associated with the beneficial information is visually recognizable for the user is formed.

In addition, the physical quantity may be a relative distance to the target.

In addition, the beneficial information may be information that is explicitly instructed by the user.

In addition, the beneficial information may be information that is assumed to be beneficial to the user.

In addition, the control unit may perform control of the presentation unit to realize presentation of information through a tactile sense of the user.

In addition, the control unit may control a form of the presentation in accordance with a relative positional relation with the target associated with the beneficial information.

In addition, in order to solve the problems described above, according to another aspect of the present invention, there is provided a presentation system including: a presentation unit configured to perform presentation of information to a user; and a control unit configured to control the presentation of information using the presentation unit, in which the control unit causes the presentation unit to present beneficial information that is beneficial to the user as the information.

### Advantageous Effects of Invention

As described above, according to the present invention, information that is beneficial to a user can be caused to be perceived by the user.

### Brief Description of Drawings

[FIG. 1] FIG. 1 is a block diagram illustrating an example of the configuration of a presentation system according to an embodiment of the present disclosure.
[FIG. 2] FIG. 2 is a diagram illustrating an example of control in a case in which beneficial information according to the embodiment is collected in accordance with an instruction from a user.
[FIG. 3] FIG. 3 is a diagram illustrating an example of control in a case in which beneficial information according to the embodiment is collected without being dependent on an instruction from a user.
[FIG. 4] FIG. 4 is a diagram illustrating an example of control in a case in which beneficial information according to the embodiment is path information.

### Description of Embodiments

Hereinafter, a preferred embodiment of the present invention will be described in detail with reference to the attached drawings. In this specification and the drawings, the same reference signs will be assigned to constituent elements having substantially the same functional configurations, and duplicate description thereof will be omitted.

### <1. Embodiment>

### <<1.1. Overview>>

First, an overview of the present invention will be described. As described above, in recent years, devices presenting various kinds of information to users have been developed. Examples of the devices described above include the vicinity information display device disclosed in Patent Literature 1. According to the vicinity information display device described above, a user is able to perceive information about facilities present on the vicinity of the current position in association with a positional relation.

However, in the vicinity information display device disclosed in Patent Literature 1, in a case in which the amount of information acquired from the vicinity is large, the amount of information presented to a user becomes large as well. In addition, in the vicinity information display device described above, the acquired information of a plurality of facilities is displayed with the same appearance regardless of benefits to a user. In this case, there is a possibility of information having a high degree of benefit for a user being buried in information having a low degree of benefit and the user missing the information having a high degree of benefit.

In order to avoid the situation as described above, for example, a technique in which a user designates an arbitrary facility type in advance, and only information of facilities corresponding to the designated facility type is displayed is conceivable.

However, it is conceivable that information beneficial to a user be included in the acquired information in addition to the information that is explicitly designated by the user. For this reason, in the technique described above, information of which the benefits thereof a user will not become aware of may be discarded without being displayed, and, as a result, there is a possibility of the benefits to the user being impaired. In addition, it is preferable that information about the safety of a user and the vicinity and the like be displayed every time even in a case in which such information has not been designated by the user.

A control device 20 and a presentation system 1 according to an embodiment of the present disclosure are devised in consideration of the points described above and enable information beneficial to a user to be perceived by the user. For this reason, the control device 20 according to an embodiment of the present disclosure includes a control unit 210 that controls presentation of information using a presentation unit 310. In addition, the control unit 210 according to an embodiment of the present disclosure causes the presentation unit 310 to present beneficial information that is beneficial to a user as the information described above, which is one of features.

Hereinafter, configurations of the control device 20 and the presentation system 1 having the features described above will be described in detail.

### << 1.2. Example of system configuration >>

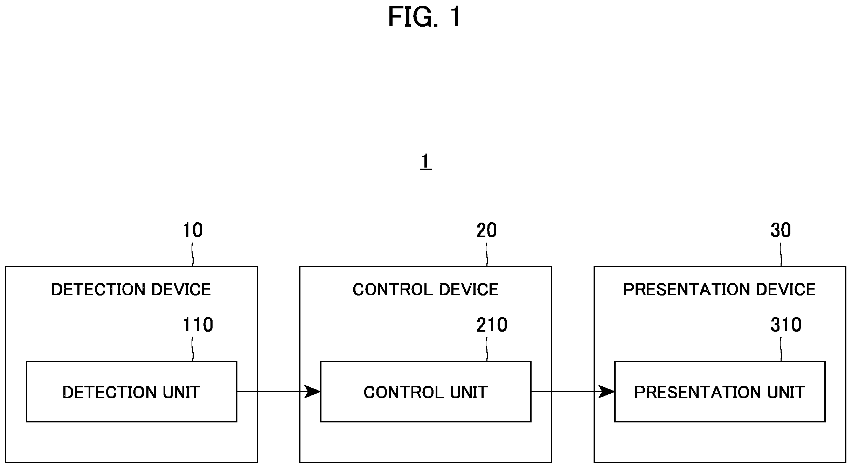

FIG. 1 is a block diagram illustrating an example of the configuration of the presentation system 1 according to an embodiment of the present disclosure. As illustrated in FIG. 1, for example, the presentation system 1 according to this embodiment includes a detection device 10, a control device 20, and a presentation device 30.

### (Detection device 10)

The detection device 10 according to this embodiment includes a detection unit 110 that performs collection of information about the vicinity of the current position and the like and various detections relating to surrounding environments. For example, the detection unit 110 according to this embodiment may collect information of the vicinity of the current position from a car navigation system, the Internet, or the like or may collect information by performing radio communication with a device of a fixed type (for example, a roadside device) present on the vicinity, a mobile body (for example, a vehicle or the like) of which a position dynamically changes or the like. For this reason, the detection unit 110 according to this embodiment includes various communication devices.

In addition, the detection unit 110 according to this embodiment has a function of detecting a static object and a moving object, which are present in the vicinity, a topography of the vicinity, and the like. For example, the detection unit 110 may detect static objects such as facilities, sign boards, and the like present in the vicinity and moving objects such as vehicles, persons, animals, and the like. In addition, the detection unit 110 may detect a road surface state, the weather, and the like at the current position.

For this reason, the detection unit 110 according to this embodiment, for example, includes an imaging sensor, a microphone, various optical sensors including an infrared sensor, a temperature sensor, a vibration sensor, a global navigation satellite system (GNSS) signal reception device, and the like.

### (Control device 20)

The control device 20 according to this embodiment includes a control unit 210 that controls presentation of information using a presentation unit 310 to be described below. The control unit 210 according to this embodiment may cause the presentation unit 310 to present beneficial information that is information beneficial to a user as the information described above. In addition, the control unit 210 according to this embodiment may cause the presentation unit 310 to perform presentation of the information described above in a case in which a predetermined condition is satisfied.

Here, for example, the predetermined condition described above may be a change of a relative physical quantity with respect to a target associated with beneficial information. An example of the relative physical quantity described above is a relative distance with respect to the target described above.

In addition, for example, the predetermined condition described above may be a case in which a state, in which a user can perceive a target associated with beneficial information, is formed. For example, in a case in which a target associated with beneficial information can be perceived by the visual sense, the control unit 210 may cause the presentation unit 310 to present beneficial information in a case in which a state, in which the target can be visually perceived by a user, is formed. Examples of the target as described above include various objects. In addition, a target associated with beneficial information is not limited to an object and may be an event that can be perceived by a sense other than the visual sense. Examples of the target include a siren of an emergency vehicle and the like. In this case, beneficial information is the presence of an ambulance vehicle, and a target associated with the beneficial information may be a siren or light of a warning lamp output by the ambulance vehicle. In addition, as a case in which a state in which a target can be perceived by a user is formed, there is a case in which a predetermined mental condition of a person satisfies a defined state. For example, in a case in which a state in which a driver is relaxing is formed, the control unit 210 may assume that a state in which a target can be perceived by a user is formed. Specific examples of the predetermined condition according to this embodiment will be additionally described below.

In addition, the beneficial information according to this embodiment, for example, may be information indicating an alarm that is explicitly instructed by a user in advance in a case in which the information becomes usable for the user. On the other hand, the beneficial information according to this embodiment may be information that is assumed to be beneficial to a user among information collected without being dependent on an instruction from the user. Details of the beneficial information according to this embodiment and the function of the control unit 210 will be additionally described below.

For example, the function of the control unit 210 according to this embodiment can be realized by a processor such as a central processing unit (CPU) or a micro controller unit (MCU), software, and a storage medium such as a read only memory (ROM) or a random access memory (RAM) in cooperation.

### (Presentation device 30)

The presentation device 30 according to this embodiment includes the presentation unit 310 that presents information to a user on the basis of control performed by the control unit 210. The presentation unit 310 according to this embodiment, for example, presents beneficial information in a form in which the beneficial information can be perceived by a user using five senses (a visual sense, an auditory sense, a tactile sense, an olfactory sense, and a gustatory sense) on the basis of the control performed by the control unit 210.

For this reason, the presentation unit 310 according to this embodiment may include a presentation element of tactile sense presentation, visual sense presentation, olfactory sense presentation, gustatory sense presentation, or auditory sense presentation or a plurality of presentation elements of different types. Examples of a tactile sense presentation element for presenting a tactile sense include a configuration performing tactile sense presentation using a vibration stimulus, a configuration performing tactile sense presentation using an electrical stimulus, a configuration performing tactile sense presentation using a temperature change, a configuration performing tactile sense presentation relating to a force sense (for example, presentation of a sense of being pressed by an object, presentation of a sense of coming into contact with an object, presentation of a sense of being tightened, or the like), a configuration performing tactile sense presentation relating to skin sensitivity (for example, presentation of an unsmooth feeling, presentation of a smooth feeling, and the like), and the like.

As visual sense presentation elements for presenting a visual sense, there are a configuration having a lighting function, a configuration in which light transmittance can be changed like in a dimming glass, and the like. As an olfactory sense presentation element for presenting an olfactory sense, there is a configuration of diffusing a scent into the air. As a gustatory sense presentation element for presenting a gustatory sense, there is a configuration of adjusting the taste of an object putting into the oral cavity, a configuration adjusting a taste of an object that has been put into an oral cavity, or the like. As an auditory sense presentation element for presenting an auditory sense, there is a configuration of generating air vibrations such as with a speaker or an earphone, a configuration having a bone conduction function, or the like.

As a new specific example of the tactile sense presentation element, a tactile sense presentation element may include a plurality of tactile sense presentation elements of which installation places are different from each other. For example, in a case in which a moving body such as a vehicle is assumed, the plurality of tactile sense presentation elements may include two or more tactile sense presentation elements among a vibration device mounted on a user's hand, a vibration device that is tightly in contact with the waist of a driver, a winding motor of a safety belt, a vibrator disposed on the floor of a vehicle, a brake, a vibrator disposed on a seat, and a vibrator disposed on a steering wheel.

In addition, the plurality of tactile sense presentation elements may include tactile sense presentation elements of which tactile sense presentation systems are different from each other. For example, the plurality of tactile sense presentation elements may include a non-contact type tactile sense presentation element performing tactile sense presentation in the state of not being in contact with a driver and a contact-type tactile sense presentation element performing tactile sense presentation in the state of being in contact with the driver. As the non-contact type tactile sense presentation element, there is an ultrasonic vibration generating device that is disposed in a center console or a door and emits ultrasonic vibration to a thigh of a user's leg, an air blower device that blows air to a face of the driver, a far infrared radiation device that irradiates a driver with far infrared rays, or the like.

As above, an example of the configuration of the presentation system 1 according to this embodiment has been described. The configuration described above described with reference to FIG. 1 is merely an example, and the configuration of the presentation system 1 according to this embodiment is not limited to such an example. For example, although a case in which the presentation system 1 includes three independent devices has been illustrated in the description presented above, for example, the detection unit 110, the control unit 210, and the presentation unit 310 according to this embodiment may be included in a single device. The configuration of the presentation system 1 according to this embodiment can be flexibly modified in accordance with specifications and operations.

### «1. 3. Application example»

Next, an application example of the presentation system 1 according to this embodiment will be described more specifically. Hereinafter, a case in which the presentation system 1 according to this embodiment is mounted in a moving body such as a vehicle and presents vicinity information will be described as an example.

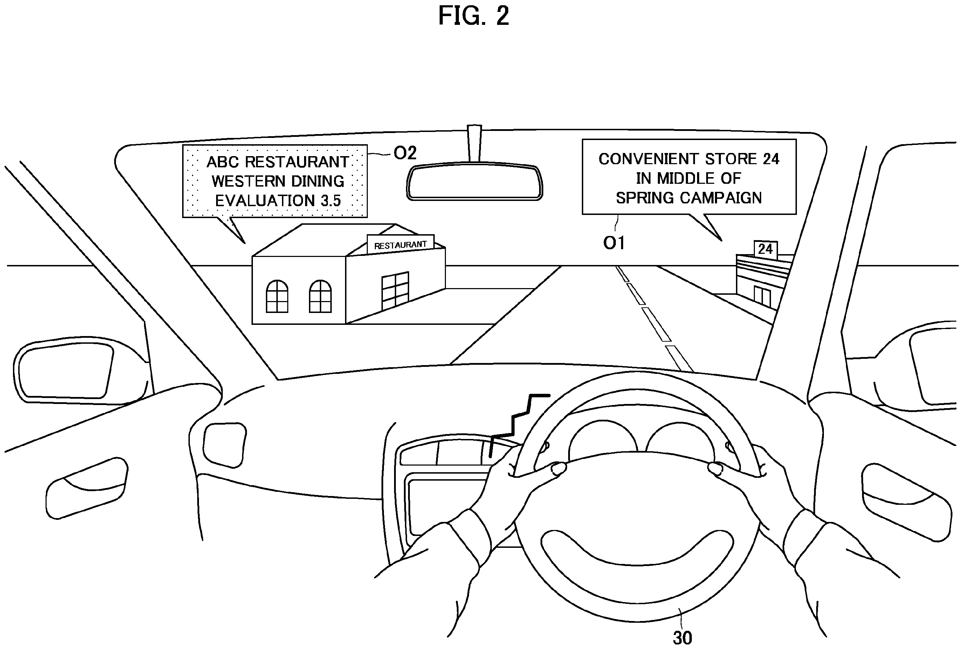

FIG. 2 is a diagram illustrating an example of control in a case in which beneficial information according to this embodiment is collected in accordance with an instruction from a user. In addition, FIG. 2 illustrates an example of a case in which a user is a driver driving a vehicle and explicitly instructs the presentation system 1 to search for results of information on restaurants present in the vicinity as beneficial information in advance.

At this time, the detection unit 110 according to this embodiment collects information about restaurants present in the vicinity of the vehicle, in other words, beneficial information explicitly instructed by a user on the basis of user's instruction. In this way, the beneficial information according to this embodiment may be information that relates to the vicinity of the current position of a user.

The detection unit 110 may collect information about restaurants from a car navigation system or may collect information about restaurants using detected position information of a vehicle, disclosed map information, and the like. In addition, the detection unit 110 may collect information that has been broadcast from devices disposed at restaurants that are present in the vicinity.

In addition, at this time, the detection unit 110 may collect information about other facilities and the like present in the vicinity in addition to the information about restaurants instructed by the user.

Next, the control unit 210 according to this embodiment performs control for causing the presentation unit 310 to present the information collected by the detection unit 110. FIG. 2 illustrates an example of a case in which the presentation unit 310 includes a head-up display formed integrally with a front windshield of the vehicle.

At this time, the presentation unit 310 may display the beneficial information collected by the detection unit 110 and information about facilities and the like that have not been explicitly instructed by a user, that is, information having a low degree of benefit to the user in association with locations of the facilities and the like detected by the detection unit 110 using augmented reality (AR) technology under the control of the control unit 210.

In a case in which a change of a relative physical quantity with respect to a target associated with beneficial information is satisfied, the control unit 210 according to this embodiment may determine that the predetermined condition is satisfied. The change of the relative physical quantity with respect to the target described above may be a change of a distance from the target.

In other words, in a case in which a relative distance between a coordinate position of a corresponding restaurant that is a target associated with the beneficial information (presence of the restaurant) and a moving body driven by a user is detected to be equal to or shorter than a predetermined distance by the detection unit 110, the control unit 210 causes the presentation device 30 to perform presentation of information.

Here, an example will be described with reference to FIG. 2. The presentation unit 310 displays information about a convenient store that has not been explicitly instructed by the user in association with a coordinate position of the convenient store, for example, using an object O1 such as an icon. Hereinafter, an icon, a display mark, and the like will be simply referred to as objects.

In addition, the presentation unit 310 displays beneficial information (presence of a restaurant) that has been explicitly instructed by the user in association with a coordinate position of a restaurant using an object O2. Here, the coordinate position may be regarded as one type of beneficial information (presence of a restaurant).

At this time, the control unit 210 according to this embodiment may cause the presentation unit 310 to present the object O2 representing beneficial information in a form different from that of the object O1 representing information having a low degree of benefit. For example, the control unit 210 may perform control of a color, a size, a shape, a display effect, and the like relating to the object O2 such that the object O2 is emphasized with respect to the object O1.

According to the control described above using the control unit 210 according to this embodiment, a user can intuitively visually recognize beneficial information instructed by the user out of information represented by a plurality of displayed objects.

At this time, in a case in which a predetermined condition is satisfied, the control unit 210 according to this embodiment performs control of the presentation unit 310 such that presentation of beneficial information through a tactile sense of a user is realized. In addition, for example, the control unit 210 may cause the presentation unit 310 to perform presentation of information through an olfactory sense, a gustatory sense, an auditory sense, or the like of the user.

Furthermore, the control unit 210 may cause the presentation unit 310 to perform tactile sense presentation using a case in which a state in which a target associated with beneficial information can be perceived by a user is formed as a predetermined condition. In the example illustrated in FIG. 2, the target described above is a coordinate position of a restaurant, and, in a case in which in a state in which an object representing the coordinate position of a restaurant and the like (for example, a building, a sign board, and the like of the restaurant) can be visually recognized by the user is formed, the control unit 210 may cause the presentation unit 310 to perform presentation of beneficial information. At this time, the control unit 210 may cause the presentation unit 310 to perform vibration presentation as a part of presentation form of beneficial information.

In addition, the control unit 210 may regard that a state in which the coordinate position of the restaurant associated with the object O2 corresponding to beneficial information can be perceived by the user is formed at a timing at which the presentation unit 310 is caused to display the object O2 and cause the presentation unit 310 to perform vibration presentation as a part of presentation forms of beneficial information.

In addition, after the presentation unit 310 is caused to display the object O2, the control unit 210 may regard that a state in which the coordinate position of a restaurant can be perceived by the user is formed at a timing at which the readability of the object O2 increases in accordance with approaching the coordinate position of the restaurant associated with the object O2 and cause the presentation unit 310 to perform vibration presentation as a part of presentation forms of beneficial information.

According to the control described above performed by the control unit 210 of this embodiment, a timing at which a state in which beneficial information can be perceived is formed can be intuitively perceived by a user through a visual sense or a tactile sense, and, as illustrated in FIG. 2, even in a case in which a display position of beneficial information presented through a visual sense changes each time in accordance with advancement of a vehicle, the possibility of overlooking beneficial information can be effectively reduced.

In addition, according to the control described above performed by the control unit 210 of this embodiment, even in a case in which information assumed to have a low degree of benefit is displayed in addition to beneficial information, a timing at which a state in which beneficial information becomes perceivable is formed can be clearly perceived by a user, and, even in a case in which other information is beneficial to the user, there remains a possibility of the user perceiving the information.

In addition, the control unit 210 according to this embodiment may control a form of presentation in accordance with a relative positional relation with a target associated with beneficial information. For example, by using a relative position between the coordinate position as beneficial information and a user (a device used by the user) as a relative positional relation, the control unit 210 may perform control of a form of information presentation using the presentation unit 310 such that the relative positional relation is notified.

In the example illustrated in FIG. 2, presence of a restaurant (coordinate position) as beneficial information is positioned on a left side in front of the vehicle. In this case, the control unit 210 performs control of the presentation unit 310 such that the object O2 representing the presence of the restaurant is displayed on the left side in front of the vehicle. In addition, the control unit 210 causes the presentation device 30 to present vibration that represents a relative position with respect to the restaurant having the vehicle as a base point. More specifically, the control unit 210 causes the presentation unit 310 disposed on the left side above a steering to perform vibration presentation based on that the restaurant described above is positioned on the left side in front of the vehicle.

According to the control described above performed by the control unit 210 according to this embodiment, a user can intuitively perceive a display position of beneficial information, and the possibility of overlooking the beneficial information can be further reduced.

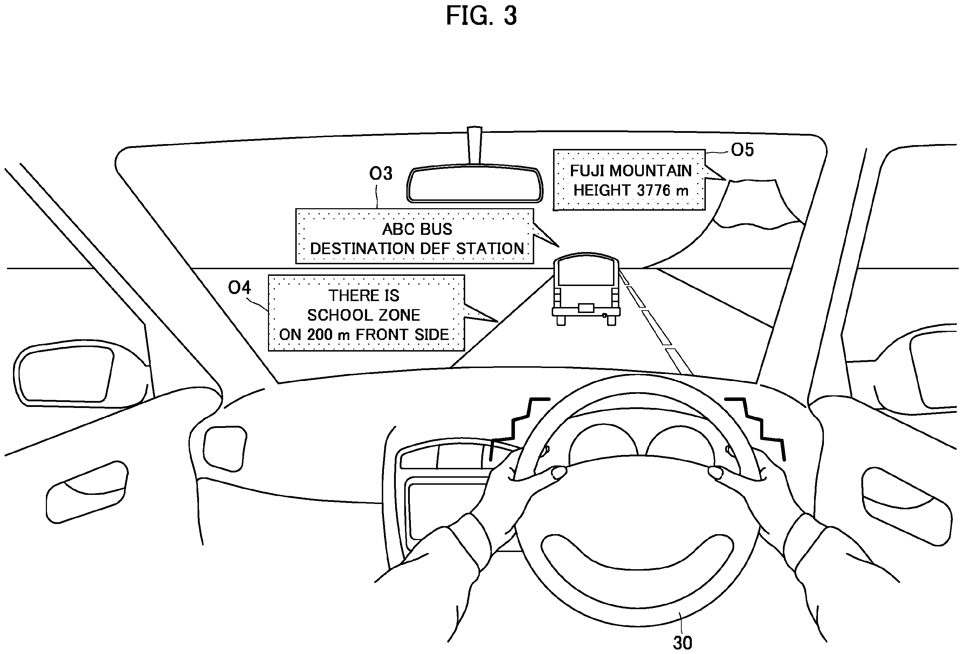

Next, control of a case in which beneficial information according to this embodiment is collected without depending on a user's explicit instruction will be described. FIG. 3 is a diagram illustrating an example of control in a case in which beneficial information according to the embodiment is collected without being dependent on an instruction from a user.

For example, information about moving bodies disposed in the vicinity and the like may be included in beneficial information collected without being dependent on a user's explicit instruction. For example, FIG. 3 illustrates a case in which the control unit 210 causes the presentation unit 310 to present beneficial information about a destination and the like of a vehicle traveling in front of the vehicle using the object O3.

By perceiving a destination of a vehicle traveling in the vicinity such as in front thereof (hereinafter, referred to as vicinity vehicle), a user can predict a behavior of the corresponding vehicle (for example, stop, left-turn, or right-turn) and use the predicted behavior for lane change, preparation of deceleration, and the like. For this reason, the destination information as described above is assumed to be beneficial to the user even in a case in which there is no explicit instruction.

In addition, for example, in a case in which the vicinity vehicle is a public bus or the like, the detection unit 110 may collect information of a destination and the like that is in public on the Internet. In addition, the detection unit 110 may receive path information broadcasted by a navigation system mounted in the vicinity vehicle.

In addition, the beneficial information is not limited to a destination of the vicinity vehicle and may be various attributes relating to the vicinity vehicle. For example, the beneficial information may be a history of accidents of the vicinity vehicle or the like or may be attributes of the driver (for example, a novice driver or an aged driver). By perceiving the beneficial information as described above, the user can use the beneficial information for his or her operation such as more attentive driving.

In addition, information of legal regulations and the like for the vicinity vehicle may be included in the beneficial information. For example, in some countries and regions, it is prohibited by the law to overtake a school bus that is temporarily stopping. In such a case, the control unit 210 may cause the presentation unit 310 to present information about the law described above as beneficial information on the basis of detection of a school bus using the detection unit 110.

According to the control as described above, user's awareness of observance of laws can be further increased, and for example, in a case in which a user is a foreigner who does not know much about details of local laws, the user can be allowed to perceive the local laws.

Next, an example of a case in which beneficial information collected without being dependent on a user's explicit instruction is information about a vicinity region or a traveling road will be described. FIG. 3 illustrates an example of a case in which the control unit 210 causes the presentation unit 310 to display beneficial information about a school using an object O4 based on that the detection unit 110 has detected the presence of the school zone in front thereof.

The information as described above is assumed to be beneficial to a user driving the vehicle even in a case in which there is no explicit instruction. Examples of such information include information about occurrences of accidents on a road during traveling (the number of occurrences of accidents in real time or in the past), information about a traffic amount (a time frame in which the number of occurrences of congestion or a traffic amount is large or the like), information relating a state of a road surface (presence/absence of freezing or wetting, holes, a level difference, a fallen object, and the like), and the like in addition to the illustrated example.

In addition, like the school bus described above, information about local laws and the like may be also included in the beneficial information about a vicinity region and roads. For example, in some countries or in some regions, there is a lane called a car pool lane in which vehicles other than vehicles in which passengers of a predetermined number or more are riding are not allowed to travel.

By presenting the information about laws as described above as beneficial information, user's awareness of observance of laws can be further increased, and for example, in a case in which a user is a foreigner who does not know much about details of local laws, the user can be allowed to perceive the local laws.

Next, an example of a case in which beneficial information collected without being dependent on a user's explicit instruction is information that relates to targets to be appreciated such as landmarks and wildlife present in the vicinity, a natural phenomenon such as a rainbow, and the like will be described. In the case of the example illustrated in FIG. 3, an example of a case in which the control unit 210 causes the presentation unit 310 to display beneficial information about Mt. Fuji using an object O5 on the basis of the detection unit 110 that has detected Mt. Fuji on the right side in front thereof is illustrated.

According to the control as described above that is performed by the control unit 210, even in the case of a place that a user visits for the first time, the user can appreciate various landmarks present at the place without overlooking them, and, even in a case in which an appreciation target such as a wildlife or a rainbow suddenly appears, the possibility of overlooking the appreciation target can be reduced.

As above, specific examples of the case in which beneficial information according to this embodiment is collected without being dependent on a user's explicit instruction have been described. In addition, even in this case, similar to the case of beneficial information based on an explicit instruction, the control unit 210 may cause the presentation unit 310 to perform vibration presentation or the like as a part of presentation forms of the beneficial information at a timing at which a target associated with the beneficial information becomes perceivable for the user.

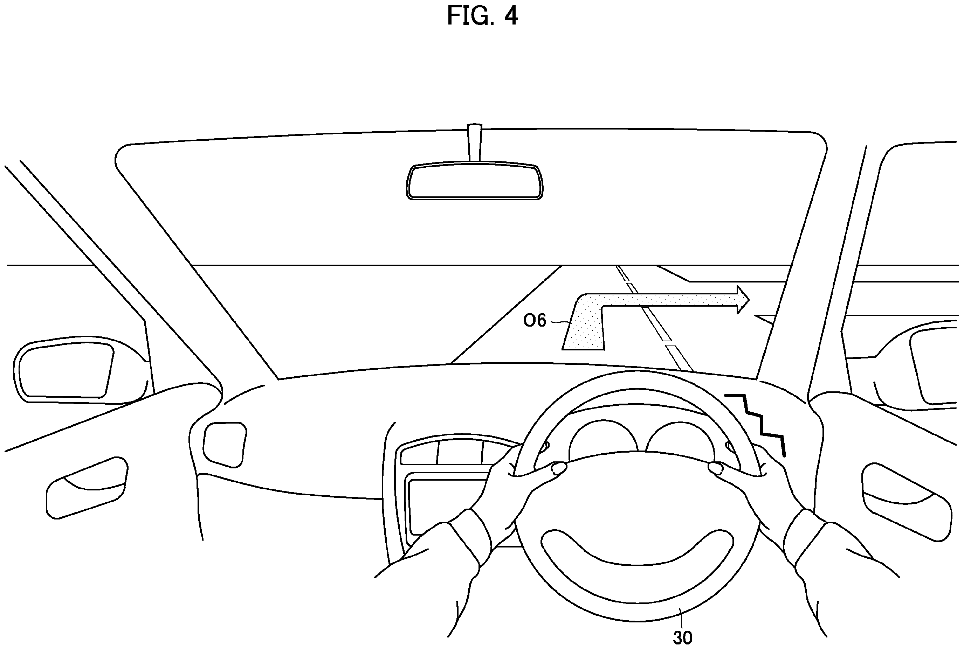

Next, an example of a case in which beneficial information according to this embodiment is path information will be described. FIG. 4 is a diagram illustrating an example of control in a case in which beneficial information according to this embodiment is path information.

FIG. 4 illustrates an example of a case in which the control unit 210 causes the presentation unit 310 to display an object O6 representing a right turn at a junction of three roads disposed in front thereof in association with a location of the junction of three roads on the basis of navigation information based on a path designated by the user.

According to the control as described above that is performed by the control unit 210 according to this embodiment, path information can be displayed in an overlapping manner in association with a location of a real road, and, compared to a general navigation system, a timing for a right turn or a left turn can be represented to a user in a more easily understandable manner.

In addition, in a case in which a change of a relative physical quantity with respect to a target associated with beneficial information is satisfied, the control unit 210 may perform control of a form of tactile sense presentation as a part of presentation forms of the beneficial information. For example, in the case of the example illustrated in FIG. 4, the control unit 210 may perform control of increasing the intensity of vibration presentation, shortening an interval of vibration presentation, or the like using the presentation unit 310 when the vehicle becomes closer to a junction of three roads at which a right turn will be made, in other words, when the display position of the object O6 becomes closer.

According to the control as described above that is performed by the control unit 210 according to this embodiment, a user can appropriately perceive a timing of a right turn, a left turn, or the like, and thus the possibility of arriving at a destination without being get lost can be raised.

As above, the display of the beneficial information and the control of tactile sense presentation according to this embodiment have been described. In addition, in the description presented above, although a case in which the presentation system 1 according to this embodiment is mounted in a mobile body such as a vehicle or the like has been described as an example, the application of the presentation system 1 according to this embodiment is not limited to the related example.

For example, the presentation system 1 according to this embodiment may be applied to an information search using an information processing device such as a smartphone, a tablet, or a personal computer (PC). In such a case, the control unit 210 may cause the presentation unit 310 to present information at a timing at which beneficial information is displayed on the screen.

According to the control as described above, for example, even in a case in which a user scrolls the screen at a high speed, the timing at which the beneficial information becomes visible for the user can be notified to the user, and the efficiency of the information search can be significantly improved.

### <2. Summing-up>

As described above, the control device 20 according to one embodiment of the present disclosure includes the control unit 210 that controls presentation of a tactile sense using the presentation unit 310. In addition, in a case in which a state in which beneficial information beneficial to a user is usable is formed, the control unit 210 according to one embodiment of the present disclosure causes the presentation unit 310 to perform presentation of a tactile sense, which is one of features of the control unit. According to the related configuration, information that is beneficial to a user can be allowed to be visually recognized by the user intuitively.

As above, although a preferred embodiment of the present invention has been described in detail with reference to the attached drawings, the present invention is not limited to such an example. It is apparent that a person having ordinary knowledge in the field of technologies to which the present invention belongs can reach various changed examples and modified examples within the scope of a technical ideal described in the claims, and it is understood that these naturally belong to the technical scope of the present invention as well.

### (1) Another application example of predetermined condition relating to change of relative distance

An application example of the presentation system 1 for the predetermined condition relating to a change of a relative distance with respect to a target associated with beneficial information is not limited that described in the embodiment described above. Hereinafter, other application examples will be described.

For example, the presentation system 1 may set being close to an ice cream store as the predetermined condition. Then, the presentation system 1 may present presence of the ice cream store as beneficial information. In such a case, the control unit 210 may perform control of the presentation device 30 such that vibration as beneficial information is presented in a case in which it is detected by the detection unit 110 that a relative distance between the ice cream store that is a target associated with the beneficial information and a user becomes equal to or smaller than a predetermined value.

For example, the presentation system 1 may set being close to a store introduced in a television program as the predetermined condition. Then, the presentation system 1 may present presence of the corresponding store as beneficial information. In such a case, the control unit 210 may perform control of the presentation device 30 such that beneficial information is presented in a case in which it is detected by the detection unit 110 that a relative distance between the store that is a target associated with the beneficial information and a user becomes equal to or smaller than a predetermined value.

For example, the presentation system 1 may set a child of a user being separated away from the user's side as the predetermined condition. Then, the presentation system 1 may present the child of the user being separated away from the user's side as beneficial information. In such a case, the control unit 210 may perform control of the presentation device 30 such that beneficial information is presented in a case in which it is detected by the detection unit 110 that a relative distance between a child that is a target associated with the beneficial information and a user becomes equal to or larger than a predetermined value.

For example, the presentation system 1 may set approach of a rain cloud or a thunder cloud as the predetermined condition. Then, the presentation system 1 may present approach of a rain cloud or a thunder cloud and raining outside as beneficial information. In such a case, the control unit 210 may perform control of the presentation device 30 such that beneficial information is presented in a case in which it is detected by the detection unit 110 that a relative distance between a rain cloud or a thunder cloud that is a target associated with the beneficial information and a user becomes equal to or smaller than a predetermined value.

For example, the presentation system 1 may set approach of a creature that a user dislikes as the predetermined condition. An example of such a creature is a mosquito. Then, the presentation system 1 may present approach of a creature that the user dislikes as beneficial information. In such a case, the control unit 210 may perform control of the presentation device 30 such that beneficial information is presented in a case in which it is detected by the detection unit 110 that a relative distance between the creature, which the user dislikes, that is a target associated with the beneficial information and the user becomes equal to or smaller than a predetermined value.

For example, the presentation system 1 may set being close to a place in which a radiation dose is large as the predetermined condition. Then, the presentation system 1 may present being close to a place in which a radiation dose is large as beneficial information. In such a case, the control unit 210 may perform control of the presentation device 30 such that beneficial information is presented in a case in which it is detected by the detection unit 110 that a relative distance between a place in which a radiation dose is large that is a target associated with the beneficial information and a user becomes equal to or smaller than a predetermined value.

For example, in a case in which a user is riding an electric train, the presentation system 1 may set approach to a destination station of the user as the predetermined condition. Then, the presentation system 1 may present approach to a user's destination station as beneficial information. In such a case, the control unit 210 may perform control of the presentation device 30 such that beneficial information is presented in a case in which it is detected by the detection unit 110 that a relative distance between a user's destination station that is a target associated with the beneficial information and the user becomes equal to or smaller than a predetermined value. At this time, it is preferable to present vibration.

For example, the presentation system 1 may set approach of specific other persons registered in the presentation system 1 in advance as the predetermined condition. Examples of the specific other persons are user's family members and user's friends. Then, the presentation system 1 may present approach of specific other person as beneficial information. In such a case, the control unit 210 may perform control of the presentation device 30 such that beneficial information is presented in a case in which it is detected by the detection unit 110 that a relative distance between specific other person who is a target associated with the beneficial information and the user becomes equal to or smaller than a predetermined value.

For example, the presentation system 1 may set approach of a user to an object that has previously been lost as the predetermined condition. Then, the presentation system 1 may present approach of a user to an object that has previously been lost as beneficial information. In such a case, the control unit 210 may perform control of the presentation device 30 such that beneficial information is presented in a case in which it is detected by the detection unit 110 that a relative distance between an object that has previously been lost by a user that is a target associated with the beneficial information and the user becomes equal to or smaller than a predetermined value.

For example, the presentation system 1 may set approach to a user's seat in a concert hall as the predetermined condition. Then, the presentation system 1 may present approach to a user's seat as beneficial information. In such a case, the control unit 210 may perform control of the presentation device 30 such that beneficial information is presented in a case in which it is detected by the detection unit 110 that a relative distance between a user's seat that is a target associated with the beneficial information and the user becomes equal to or smaller than a predetermined value.

### (2) Another example of beneficial information

Details of the beneficial information are not limited to those described in the embodiment described above. Hereinafter, other examples of the beneficial information will be described.

The beneficial information may include at least one piece of various kinds of information described below.

### - Information about health of mind and body

The beneficial information may include information about health of minds and bodies of a user and other persons relating to the user. Examples of such other persons include family members of the user and friends of the user.

As an example, in a case in which a user borrows a large amount of money from a friend over a long period, the presentation system 1 may present information that represents a psychological distance between the user and the friend is long as the beneficial information. For example, a psychological distance between a user and a friend being long can be detected in accordance with the amount of borrowed money exceeding a predetermined value and/or a period in which money is borrowed exceeding a predetermined value.

As another example, in a case in which a user is having a parasol up, the presentation system 1 may present information indicating the amount of ultraviolet light being in a harmful level and recommending not to close a parasol as the beneficial information.

As another example, in a case in which a user has allergy, the presentation system 1 may present information for warning the user not to erroneously eat foods that may cause allergic reactions as the beneficial information. For example, it may be detected whether or not a food may cause an allergic reaction on the basis of information of raw materials stored in a tag that is attached to the food.

As another example, the presentation system 1 may present information for warning that the freshness date of a food will expire as the beneficial information. For example, by automatically registering information of freshness dates of foods by communicating with a register system of a store when a user purchases a food, the presentation system 1 can use the registered information for presenting beneficial information.

As another example, the presentation system 1 may present information for warning overeating and overdrinking of a user as the beneficial information.

As another example, the presentation system 1 may present information for warning that user's intake calory for one day will exceed a predetermined value as the beneficial information.

As another example, the presentation system 1 may present information for warning that the posture of a user deteriorates as the beneficial information. For example, such information can be presented to a part of a body (for example, the back or the like) relating to the posture that has deteriorated as vibration that is unpleasant to the user.

As another example, the presentation system 1 may present information for warning that the size of feet of a child of a user does not fit the size of shoes and recommending to buy shoes of the child of the user and replace the shoes as the beneficial information. For example, the size of feet of a child of a user becomes unfit to the size of the shoes can be estimated on the basis of a growth curve of the size of feet of a general child that is represented through statistics.

As another example, the presentation system 1 may present information indicating that a time period for being vaccinated has arrived as the beneficial information.

### - Information about physiological phenomenon

The beneficial information may include information about physiological phenomena of a user and other persons relating to the user. Examples of such other persons include family members of the user and friends of the user.

As an example, the presentation system 1 may present approach of labor pain of user's wife to husband who is the user as the beneficial information. For example, an electrical stimulus generating pain similar to the labor pain may be presented as the beneficial information.

As another example, the presentation system 1 may present that a child of a user has a desire to urinate as the beneficial information. For example, it can be estimated on the basis of the amount of intake moisture of a child, the amount of perspiration of the child, temperature, and the like that a child has a desire to urinate.

As another example, the presentation system 1 may present that deciduous teeth of a child of a user are likely to come out as the beneficial information. For example, it can be estimated on the basis of average timings at which deciduous teeth come out indicated through statistics whether the deciduous teeth of a child are likely to come out.

### - Information about impending danger

The beneficial information may include information about impending danger for a user and other persons relating to the user. Examples of such other persons include family members of the user and friends of the user.

As an example, in a case in which an earthquake occurs, the presentation system 1 may present information about the earthquake such as a place of the epicenter, a distance from the epicenter to a user, a magnitude of the earthquake, and the like as the beneficial information. The presentation system 1 may present a vibration stimulus of a magnitude according to the size of the magnitude of the earthquake as a vibration stimulus.

As another example, the presentation system 1 may present a vehicle driven by a user entering a commute area of an elementary school as the beneficial information.

As another example, the presentation system 1 may present information for warning that a vehicle driven by a user is likely to be in contact with an object disposed in the vicinity as the beneficial information. For example, the presentation system 1 acquires a distance to an object disposed in the vicinity using a sonar disposed in a vehicle and, in a case in which the distance to the object disposed in the vicinity is equal to or smaller than a predetermined value, may present beneficial information as a vibration stimulus.

As another example, in a case in which a child is likely to take a behavior that may cause an injury, the presentation system 1 may perform presentation of a tactile sense for inhibiting the behavior of the child for the child. Examples of a behavior that may cause a child to be injured are running out to a road and jumping down from a high place. An example of presentation of a tactile sense for inhibiting a behavior of a child is fastening a band wrapped around a wrist or the like of the child.

As another example, the presentation system 1 may present information for warning approach to an object of high temperature causing a hand to be burned when being in touch with the object as the beneficial information. It is preferable that such beneficial information be presented in a form for calling attention such as a sharp vibration stimulus, a sharp electrical stimulus, or the like.

As another example, the presentation system 1 may present information for warning a user about approach of a suspicious person as the beneficial information.

As another example, the presentation system 1 may present information for warning that the speed of a vehicle driven by a user exceeds a legal speed limit as the beneficial information.

### - Information about asset

The beneficial information may include information about assets of a user and other persons relating to the user. Examples of such other persons include family members of the user and friends of the user.

As an example, the presentation system 1 may present a balance of a prepaid card being small as the beneficial information.

As another example, when a user is shopping, the presentation system 1 may present a total price of products inserted into a shopping cart exceeding a budget as the beneficial information.

As another example, the presentation system 1 may present an account balance being likely to be below a withdrawal amount as the beneficial information. For example, by predicting a withdrawal amount on the basis of a use history of a credit card and comparing the predicted withdrawal amount with an account balance, the presentation system 1 can detect that the account balance is below the withdrawal amount.

### - Information about operation schedule

The beneficial information may include information about operation schedules of a user and other persons relating to the user. Examples of such other persons include family members of the user and friends of the user.

As an example, in a case in which a user has made a reservation, the presentation system 1 may present approach of a time for riding an electrical train that has been reserved as the beneficial information.

### - Information about owned device

The beneficial information may include information about devices owned by a user and other persons relating to the user. Examples of such other persons include family members of the user and friends of the user.

As an example, the presentation system 1 may present that a wireless connection according to Wi-Fi (a registered trademark) of a smartphone owned by a user will be cut off as the beneficial information.

As above, various modified examples have been described.

In addition, effects described in this specification are merely descriptive or exemplary but are not restrictive. In other words, the technology relating to the present disclosure may have other effects that are apparent to a person skilled in the art from the description of the present specification together with the effects described above or instead of the effects described above.

In addition, a program for causing hardware such as a CPU, a ROM, a RAM, and the like built into a computer to exhibit functions equivalent to those of the configuration of the control device 20 can be also generated, and a computerreadable non-transitory recording medium on which the program has been recorded can be provided as well.

### Reference Signs List

- 1: Presentation system
- 10: Detection device
- 110: Detection unit
- 20: Control device
- 210: Control unit
- 30: Presentation device
- 310: Presentation unit

## Claims

1. A control device comprising:
a control unit configured to control presentation of information using a presentation unit,
wherein the control unit causes the presentation unit to present beneficial information that is beneficial to a user as the information.

2. The control device according to claim 1, wherein the control unit causes the presentation unit to present the information in a case in which a predetermined condition is satisfied.

3. The control device according to claim 2, wherein the predetermined condition is a change of a relative physical quantity with a target associated with the beneficial information.

4. The control device according to claim 2, wherein the predetermined condition is a case in which a state in which the target associated with the beneficial information is perceivable for the user is formed.

5. The control device according to claim 4, wherein the predetermined condition is a case in which a state in which the target associated with the beneficial information is visually recognizable for the user is formed.

6. The control device according to claim 3, wherein the physical quantity is a relative distance to the target.

7. The control device according to any one of claims 1 to 5, wherein the beneficial information is information that is explicitly instructed by the user.

8. The control device according to any one of claims 1 to 5, wherein the beneficial information is information that is assumed to be beneficial to the user.

9. The control device according to any one of claims 1 to 8, wherein the beneficial information includes at least one of information about health of minds and bodies of the user and other persons relating to the user, information about physiological phenomena of the user and other persons relating to the user, information about impending danger for the user and other persons relating to the user, information about assets of the user and other persons relating to the user, information about operation schedules of the user and other persons relating to the user, and information about devices owned by the user and other persons relating to the user.

10. The control device according to any one of claims 1 to 9, wherein the control unit performs control of the presentation unit to realize presentation of information through a tactile sense of the user.

11. The control device according to any one of claims 1 to 10, wherein the control unit controls a form of the presentation in accordance with a relative positional relation with the target associated with the beneficial information.

12. A presentation system comprising:
a presentation unit configured to perform presentation of information to a user; and
a control unit configured to control the presentation of information using the presentation unit,
wherein the control unit causes the presentation unit to present beneficial information that is beneficial to the user as the information.
